Europäisches Patentamt

European Patent Office

Office européen des brevets

(11) Publication number: **0 253 639 B1**

## EUROPEAN PATENT SPECIFICATION

(45) Date of publication of patent specification: **04.12.91**    (51) Int. Cl.⁵: **C08F 8/42, C09D 5/14**

(21) Application number: **87306238.4**

(22) Date of filing: **14.07.87**

(54) **Resinous particles and preparation thereof.**

(30) Priority: **14.07.86 JP 165113/86**

(43) Date of publication of application:
**20.01.88 Bulletin 88/03**

(45) Publication of the grant of the patent:
**04.12.91 Bulletin 91/49**

(84) Designated Contracting States:
**DE FR GB NL**

(56) References cited:
**EP-A- 0 093 279**
**EP-A- 0 133 779**
**EP-A- 0 244 145**
**FR-A- 2 130 465**
**FR-A- 2 302 319**

(73) Proprietor: **Nippon Paint Co., Ltd.**
**2-1-2, Oyodokita Oyodo-ku**
**Osaka-shi Osaka-fu(JP)**

(72) Inventor: **Kanda, Kazunori**
**59-13, Asahigaoka 2-chome**
**Yao-shi Osaka-fu(JP)**
Inventor: **Yamamori, Naoki**
**9-201, 1130, Aomatani**
**Minoo-shi Osaka-fu(JP)**
Inventor: **Miyazono, Tadafumi**
**1-2-10 Yanagawa-cho**
**Takatsuki-shi Osaka-fu(JP)**

(74) Representative: **Whalley, Kevin et al**
**MARKS & CLERK 57/60 Lincoln's Inn Fields**
**London WC2A 3LS(GB)**

Rank Xerox (UK) Business Services

## Description

The present invention relates to resinous particles carrying on the respective grain surface a metal compound and a preparation method thereof.

More specifically, the invention concerns resinous particles carrying on the respective grain surface a metal compound having bioactivity against harmful livings. The invention also concerns preparation of these particles.

Direct application of such substances having biocidal activities, as, for instance, bactericides, fungicides, antiviral drugs, insecticides and herbicides, or of a coating composition containing said substances have heretofore been practiced for the protection of various industrial products from the attack by fungi and bacteria and for the protection of ship bottom and various marine constructions from the attack by sea livings as acorn shells and sea weeds.

However, recently, public attentions are directed to the technique wherein a coating composition containing resinous particles carried with toxic substance is applied onto such materials and said toxic substance is allowed to release therefrom for a longer period of time.

In this respect, the inventors have formerly proposed a self-polishing type anti-fouling paint containing crosslinked resinous particles carried with anti-fouling agent, which are obtained by either one of the following methods:

(i) an anti-fouling agent as an organotin compound, a copper compound, a mercury compound, an organoarsenic compound, a thiocarbamate compound, a tetramethyl thiuram disulphide or the like is incorporated into a polymerizable monomer and resinous particles are prepared by using thus obtained monomer,

(ii) an antifouling agent is dissolved or dispersed in a polymerizable monomer and polymerization is effected therewith, thereby effecting mechanical carry of the anti-fouling agent in the resin, or

(iii) an anti-fouling agent is added to the resinous particles and the mixture is kneaded, thereby effecting mechanical carry of the anti-fouling agent on the surfaces of said particles through adsorption or absorption.

(Japanese Patent Application No. 83439/85)

The inventors also proposed crosslinked resinous particles having anti-fouling properties, which are useful in coating compositions, plastic products and the like, prepared by the method wherein an anti-fouling agent is dissolved in a solvent which is an effective solvent for said agent but not for the resinous particles used and crosslinked resinous particles are dipped in thus obtained solution, thereby making the anti-fouling agent adsorb on or absorb in the resinous particles, or the method wherein an anti-fouling agent is mixed with a polymerisable monomer and resinous particles are prepared by using said monomer-anti-fouling agent mixture, or the method wherein a polymerizable monomer having an anti-fouling activity is copolymerised with other monomers, thereby making the anti-fouling active substance carry on the resinous particles.

(Japanese Patent Application No. 77179/85)

FR-A-2130465 relates to the preparation of supported or unsupported catalyst bearing metal oxide. For the preparation of supported catalyst, a porous supporting material is first coated with an acid polymer, contacted with a metal ion containing solution to convert the acid polymer to metal ion containing polymer, and then heated at $150°-450°C$ to effect decarboxylation and obtain the supported catalyst containing metal oxide. For the preparation of unsupported catalyst, an acid polymer solution and metal ion containing solution are mixed together, and the thus formed gelation precipitation is separated, pulverized and then subjected to decarboxylation to obtain powdery catalyst containing metal oxide. However, this cited reference does not disclose the present resinous particles carried on the respective grain surface with a metal compound through a metal ester bonding, and the various claims of the present application are clearly novel over the disclosure of this cited reference.

In either technique, a biocidal substance (or an anti-fouling agent) is carried on resinous particles by either one of the following:

(l) said substance is incorporated into a polymerizable monomer and resinous particles are prepared by using said monomer and other copolymerizable monomers.

(2) said substance is mixed with polymerizable monomers and incorporated into the resinous particles during the preparation of said particles, or

(3) said substance is mixed with resinous particles and physically absorbed or adsorbed on the respective grain surface.

However, in the abovesaid (l) method, there are such problems that anti-fouling agents to be

2

incorporated into the polymerizable monomer are limited in kind, since they should not give any harmful effects on the polymerization of thus obtained monomers, and that a comparatively larger quantity of anti-fouling agent are required since the agent is to be included not only on the surface but also in the inside of the resinous particles themselves.

In the abovesaid (2) method, though a little wider range of anti-fouling agents may be satisfactorily used as compared with said (l) method, there still remains the same problem such that the anti-fouling agent should not be the one which will cause any harmful effect on the polymerization of the polymerizable monomers.

In the abovesaid (3) method, an anti-fouling agent can be freely selected from a far wider range of substances since the method consists of the post-treatment of the formed resinous particles with the selected substance. However, as in the case of aforesaid (2) method, it is difficult to control the releasing rate of said substance from the resinous particles since the substance in question is merely carried on the surface of the respective particle through mechanical absorption or adsorption. Thus, there always leave something to be desired in having improved resinous particles being effective for a longer duration of time.

An object of the invention is therefore to provide resinous particles carrying a least quantity of active material selected from a wider range of biocidal substances, said substance being slowly released under controlled conditions when needed and being effective for a longer duration of time, the carrying and releasing of the substance being easily controlled.

Another object of the invention is to provide an industrially advantageous method for the preparation of the abovesaid resinous particles.

According to the present invention, the aforesaid objects can be attained by providing resinous particles carrying on the respective grain surface a metal compound selected from a wider range of known biocidal substances, through a metal ester bonding, that is, a covalent bond, which are prepared by reacting resinous particles prepared beforehand and the aforesaid metal compound, and by providing an industrially advantageous method for the preparation of said resinous particles.

In this invention, resinous particles carrying on the respective grain surface a metal compound through a metal ester bonding can be prepared by the reaction between a metal compound and resinous particles forming a metal ester bonding. The term "a metal compound carrying resinous particles" as used herein denotes resinous particles carried on the respective grain surface with a metal compound through a metal ester bonding.

Said reaction between a metal compound and resinous particles to form a metal ester bonding can be produced by the following methods:

(I) a method in which resinous particles having a grain diameter of about 0.0l to 250 μm (microns) and having organic acid group(s) in the form of free acid and salt on the respective grain surface are reacted with a metal compound e.g a metal oxide and/or metal hydroxide,

(II) a method in which resinous particles having a diameter of about 0.0l to 250 μm (microns) and having an alkali metal salt of an organic acid on the respective grain surface are reacted with a metal chloride.

(III) a method in which resinous.particles having a grain diameter of about 0.0l to 250 μm (microns) and having a free organic acid on the respective grain surface are reacted with a metal salt of an organic acid.

That is, in this invention, resinous particles having a defined acid value are first prepared by a conventional method, and then using said particles as a starting material, a metal compound carrying reaction by a metal compound is conducted.

The resinous particles having a defined acid value are publicly known and can be prepared, for instance, by the following methods:

(l) Dispersion method comprising conducting a polymerization of an ethylenically unsaturated monomer and an acid monomer by emulsion, suspension or precipitation, or NAD polymerization procedures, and then obtaining the intended product directly or by milling and classifying the polymerization product,

(2) Post-emulsification method, comprising mixing a surfactant, as an emulsifying agent, and at least one resin having a defined acid value, selected from the group consisting of acrylic, polyester, alkyd, epoxy, amino, polyurethane, polyvinyl, polybutadiene, silicone, phenol, xylene, toluene, cellulosic resin and the like.

(3) Powdering method, comprising granulating a crude resin powder, optionally with other resins, mixing, milling, dispersing and classifying the same, said resin powder being selected from the abovesiad resins.

It is preferred that the acid value of said resinous particles be in a range from 5 to 700, judging from the reactivity of the resin with a metal compound and the applications of thus obtained resinous particles. The resinous particles may be of crosslinked structure, as desired, though it is not essential in this invention.

The grain diameter of the resinous particles is in a range of 0.0l to 250 μm (microns).

3

The metal compounds which are to be reacted with the resinous particles having on the respective grain surface organic acid groups, as for example, carboxylic, sulfonic and phosphoric acid groups, or their amine salts or alkali metal salts, may be any metal compounds including oxides, hydroxides, chlorides and organic acid salts, providing having biocidal properties.

The metals for such metal compounds may be selected from the following groups in the periodic table: VB metals (e.g. V, Nb, Ta), VIB metals (e.g. Cr, Mo, W), VIIB metals (e.g. Mn), VIII metals (e.g. Fe, Co, Ni, Ru, Rh, Pd, Os, Ir, Pt), IB metals (e.g. Cu), IIB metals (e.g. Zn, Cd, Hg), IIIA metals (e.g. B, Al, Ga, In, Tl), IVA metals (e.g. Si, Ge, Sn, Pb), VA metals (e.g. As, Sb, Bi), VIA metals (e.g. Se, Te, Po).

Above all, particular preference is given to such metals as Ti, Zr, Cr, Mo, Mn, Fe, Co, Ni, Cu, Zn, Cd, Hg, B, Al, Si, Ge, Sn, Pb, As, Sb, Se, and Te.

The metal compound carrying reaction can be easily effected, as stated above in (I), (II) or (III), by mixing the selected starting materials and then heating under stirring at a temperature of not higher than the decomposition temperature of the desired metal ester product to form a metal ester bonding as desired.

Since a metal compound is reacted with the resinous particles prepared beforehand, and there is no polymerization hindrance at the time of preparation of said particles, one may select any metals from a wider range of metal sources, and furthermore, a metal compound carrying reaction can be easily done by the formation of a metal ester bonding between an acid group and a metal compound. Thus, in this invention, metal compound carrying reaction can be easily controlled, and moreover, thus obtained metal compound carrying resinous particles are excellent in stability, and the metal ions or metal compounds thus carried on the resin can be easily released as the metal ester bondings are forced to be opened by hydrolysis in an ionic atmosphere.

Said metal ions or metal compounds released generally have biocidal activities. When the concentration of such toxic substance is in a certain higher level, they may exhibit anti-fouling activities, producing hindrance of metabolic reactions and decreases in growth and propagation of harmful livings.

Such metal compound may also be of useful nature for sea livings. For example, they may be of the nature giving acceleration of metabolic reaction after combining with a protein or a coenzyme of sea livings.

Accordingly, in the actual use of such metal compound, careful selection of type and amount of appropriate metal compound are required depending on the intended objects. Furthermore, in this invention, since the abovesaid biocidal metal compound is merely carried on the respective grain surface of the resinous particles and released as desired, the required amount of said metal compound can be cut in a lower level as compared with the heretofore known hydrolyzable resin particles containing the same both on the surface and in the body of the respective particle, and can be effectively used.

Thus, the present resinous particles are specifically useful in various application fields as coating compositions, plastics products, binders for an agricultural chemicals, carriers for a drug-delivery-system and the like, since the resinous particles can be gradually hydrolyzed under alkaline conditions, producing metal ions or metal compounds which are toxic toward harmful livings and exhibit anti-fouling, fungicidal or bactericidal activities, turning to soluble resin particles and exhibiting the desired self-polishing properties for a longer duration of time.

The invention shall be now more fully stated in the following Examples, which however should not be taken as being of limitative in any sense. Unless otherwise being stated, all parts and percentages are by weight.

Reference Example I

Preparation of emulsifier having amphoionic groups

Into a 2 liter flask fitted with stirrer, nitrogen gas inlet tube, thermoregulator, condenser and decanter, were placed 134 parts of bishydroxy ethyl taurine, 130 parts of neopentyl glycol, 236 parts of azelaic acid, 186 parts of phthalic anhydride, and 27 parts of xylene and the mixture was heated while removing the formed water azeotropically. The temperature was raised to 190°C in about 2 hours from the commencement of reflux, stirring and dehydration were continued until the acid value reached 145 and then the mixture was allowed to cool to 140°C.

While maintaining the temperature at 140°C, 314 parts of glycidyl versatate (Cardula E-10, trade mark of Shell Co.) were dropwise added in 30 minutes and the combined mixture was further stirred for 2 hours and the reaction was completed. Thus obtained polyester resin had an acid value of 59, a hydroxyl number of 90 and a number average molecular weight (Mn) of 1054.

Example I

(i) Preparation of metal compound carrying resinous particles by emulsion polymerization

Into a l liter reaction vessel fitted with stirrer, condenser, and thermoregulator, were placed 380 parts of deionized water, 50 parts of the emulsifier having amphoionic groups obtained in Reference Example I and 5 parts of dimethyl ethanol amine and the mixture was dissolved while stirring, at 80°C. Next, a solution of 2.5 parts of azobiscyanovaleric acid in 50 parts of deionized water and I.6 parts of dimethyl ethanol amine, a mixed solution of 75 parts of methyl methacrylate, 75 parts of ethylene glycol dimethacrylate, 40 parts of styrene and 35 parts of n-butyl acrylate and a mixed solution of 25 parts of acrylic acid and 3I parts of dimethyl ethanol amine were simultaneously and dropwise added in 90 minutes and after said addition, the combined mixture was further stirred for 90 minutes to obtain an aqueous dispersion of resinous particles having a mean diameter of 55 nm, the solid content being 39%. Then, into a reaction vessel were placed I00 parts of thus obtained aqueous dispersion of resinous particles, I4 parts of tributyl tin oxide and 400 parts of xylene, and said dispersion was subjected to a vacuum heating to effect a solvent replacement and to form a metal ester bonding on the respective grain surface. Xylene was then added to obtain a transparent dispersion, whose solid content was 25%. A part of said dispersion was diluted with toluene and then subjected to a centrifugal separation and an elemental analysis was conducted with thus separated resin particles by Energy Dispersion Type X-ray Analyser (EDX) fitted Scanning Type Electronmicroscope (SEM). The presence of tin on the grain surface was thus confirmed.

(ii) Next, the states of grain surface before and after the treatment with tributyl tin oxide were analysed by infra-red (IR) spectrographic examination.

It was confirmed that the absorption peak at I700 $cm^{-1}$ coming from ester bond was diminished, the peak at I680 $cm^{-1}$ due to carboxylic acid was disappeared and the characteristic peak at I600 $cm^{-1}$ due to metal ester bonding was observed with the particles after the treatment by tributyl tin oxide, while with the particles before said treatment the absorption peak at I700 $cm^{-1}$ and the peak at I680 $cm^{-1}$ were clearly detected.

Furthermore, the tributyl tin oxide treated particles were immersed in 0.2N sodium hydroxide aqueous solution for 40 minutes and then they were rinsed with acetone. In an infra-red spectrographic examination with thus obtained particles, the strong absorption peaks at I700 $cm^{-1}$ and at I680 $cm^{-1}$ were observed just as with the particles before the treatment.

(iii) Surface analysis by XPS:

With the same three kinds of resinous particles as used in the preceding paragraph (ii), XPS analysis of the most outward surface of the particles was conducted.

It was confirmed that the peaks due to Sn3d, Sn3p and Sn3s were far clearly detected with the particles treated with tributyl tin oxide than with the cases with other particles. The peaks due to Sn3d at 488 eV and 497 eV were particularly prominent. Then the surface of the particles treated with tributyl tin oxide was etched with Argon. The peak due to Sn3d was traced after one-minute and 5-minute etching respectively, and a decrease of the peak was observed in proportion to the extent of said etching.

From the results of the abovementioned examinations (ii) and (iii), it was confirmed that tin metal was surely carried on the surface of the respective resinous particle through metal-ester bonding, after treatment with tributyl tin oxide.

Example 2

Preparation of metal compound carrying resinous particles by precipitation polymerization

Into a l liter reaction vessel fitted with stirrer, condenser, and thermoregulator, were placed 900 parts of Solvesso I50 (high boiling point aromatic hydrocarbon, trade mark of Tonen Sekiyu Co.), and the mixture was, while introducing a nitrogen gas stream, heated to 50°C. To this, a mixture of 30 parts of methacrylic acid, 40 parts of ethylene glycol dimethacrylate and 30 parts of methyl methacrylate was dropwise added and stirred for I0 minutes. After said stirring, the temperature was raised to 70°C gradually and the reaction was continued for additional 4 hours to obtain a white resin precipitate. Then, 2I3 parts of copper naphthenate was added and the reaction was continued for additional I0 hours to effect a treatment to obtain a metal ester bonding. Then, said resin precipitate was separated by filtration with filter paper, washed with isopropyl alcohol repeatedly 5 times and dried by vacuum drying to obtain resinous particles. The grain diameter of the primary particle was I.2 μm according to the observation by SEM. An apparent peak due to copper was confirmed by elemental analysis by EDX.

Repeating the same procedures of (ii) and (iii) in Example I but substituting copper naphthenate for tributyl tin oxide and also substituting the particles obtained in Example 2 for the particles obtained in (i) of

5

Example I, a surface analysis of the resin particles by IR and XPS was conducted. From the results of the abovementioned examinations, it was confirmed that copper was surely carried on the grain surface through a metal ester bonding owing to the treatment by copper naphthenate.

Example 3

Preparation of metal compound carrying resinous particles by suspension polymerization

Into a I liter reaction vessel fitted with stirrer, condenser and thermoregulator, were placed I000 parts of deionized water and 30 parts of polyvinyl alcohol (average molecular weight I500), and the mixture was, while stirring at I000 rpm and introducing a nitrogen gas stream, heated to 60°C. To this, a mixutre of I0 parts of methyl acrylate, 5 parts of acrylic acid, 48 parts of methyl methacrylate, 2 parts of 2-hydroxyethyl acrylate, 35 parts of divinyl benzene and I part of 2,2-azobis-(2,4-dimethyl valeronitrile) (V-65, trade mark of Wako Junyaku Kogyo Co. , polymerization initiator) obtained by stirring was dropwise added in I hour.

After said addition, the temperature of the reaction mixture was raised to 70°C and the reaction was continued for additional 2 hours to obtain a suspension liquid of resinous particles.

Into said suspension, a mixture of 22 parts of tributyl tin oxide and I0 parts of isopropyl alcohol was added and effected a grain surface treatment at 70°C for 5 hours to obtain a suspension liquid of metal compound carrying resinous particles having a metal ester bonding on the surface thereof.

The suspension liquid was then subjected to a centrifugal separation, and the polymer particles were separated and again dispersed in a deionized water. Repeating the same separation operation for additional two times, the desired polymer particles were obtained in powder form. An average grain diameter of said particles was 55 $\mu$m (microns).

Repeating the same procedures of (ii) and (iii) in Example I but substituting the resinous particles obtained in Example 3 for the particles obtained in (i) of Example I, a surface analysis of the resinous particles by IR and XPS was conducted.

From the results of the abovementioned examinations, it was confirmed that tin was carried on the grain surface through a metal ester bonding owing to the treatment by tributyl tin oxide.

Example 4

Preparation of metal compound carrying resinous particles from powdered resin

A powdered form of carboxylic acid modified acrylic resin having an acid value of 77, Tg of 70°C and the MI value of I3 was milled, dispersed and classified to obtain resinous particles having an average grain diameter of II0 $\mu$m.

Into a pot mill, were placed I00 parts of said powdered resin and 4 parts of copper naphthenate, and the pot mill was rotated to effect dispersion for 20 hours to obtain a powdered, metal compound carrying resinous particles.

Repeating the same procedures of Example 2 but substituting the resinous particles obtained in Example 4 for the particles obtained in Example 2, a surface analysis of the resinous particles by IR and XPS was conducted.

From the results of the abovementioned examinations, it was confirmed that copper was carried on the grain surface through a metal ester bonding owing to the treatment by copper naphthenate.

Example 5

Preparation of metal compound carrying resinous particles by emulsion polymerization

Repeating the same procedures as stated in Example I, but substituting the mixed solution of 50 parts of methyl methacrylate and 25 parts of tributyl tin methacrylate for 75 parts of methyl methacrylate, metal compound carrying resinous particles were obtained.

An average grain diameter of said resinous particles was 65 nm.

Reference Example 2

Into a I liter reaction vessel fitted with reflux condenser, dropping funnel, stirrer and thermoregulator, were placed 50 parts of xylene, 30 parts of methyl isobutyl ketone and 20 parts of n-butanol and the

6

mixture was maintained at 90°C. To this, a mixed solution of I0 parts of tributyl tin methacrylate, 25 parts of methyl methacrylate, 20 parts of styrene, I0 parts of methyl acrylate, 35 parts of hydroxypropyl acrylate and I.4 parts of azobisisobutyronitrile was dropwise added in 4 hours and the mixture was maintained at the same temperature for additional 2 hours to obtain a varnish A having a solid content of 49.6%.

A number average molecular weight of the resin was I400.

Reference Example 3

Preparation of resinous particles by emulsion polymerization

Into a I liter reaction vessel fitted stirrer, condenser, and thermoregulator, were placed 380 parts of deionized water, 50 parts of the emulsifier having amphoionic groups obtained in Reference Example I and 5 parts of dimethyl ethanol amine and the mixture was dissolved, while stirring, at 80°C. Next, a solution of 2.5 parts of azobiscyanovaleric acid in 50 parts of deionized water and I.6 parts of dimethyl ethanol amine and a mixed solution of I00 parts of tributyl tin methacrylate, 75 parts of ethylene glycol dimethacrylate, 40 parts of styrene and 35 parts of n-butyl acrylate were simultaneously and dropwise added in 90 minutes and after said addition, the combined mixture was further stirred for 90 minutes to obtain an aqueous dispersion of resinous particles having a mean diameter of 52 nm, the solid content being 90%.

Then said polymer dispersion was subjected to a solvent replacement by xylene to obtain a xylene dispersion of said resinous particles, whose solid content was 25%.

Example 6

An anti-fouling coating composition was prepared by mixing I00 parts of the vanish A obtained in Reference Example 2, 80 parts of the xylene dispersion of the metal compound carrying resinous particles obtained in Example I and 2 parts of triphenyl tin chloride.

Onto a steel plate, the aforesaid coating composition was applied so as to give a coating of I00 μm dry thickness. Thus obtained test plate was attached to Discrotor, immersed in sea water (I8 to 23°C) and rotated at a constant speed for 60 days (days and nights).

Use-up rate of the coating was determined by measuring the film thickness by microscope and using the following equation:

$$\text{Use-up rate} = \frac{\text{initial film thickness} - \text{final film thickness}}{\text{initial film thickness}}$$

It was found that the use-up rate was 0.24.

Nest, the test plate was subjected to an anti-fouling test in sea water at Aioi Bay, Hyogo-ken, Japan.

It was found that after 3 months' immersion in sea water, surface area adhered with submarine livings was 0%.

Comparative Example I

An anti-fouling coating composition was prepared as in Example 6 but substituting the liquid dispersion of the resinous particles obtained in Reference Example 3 for the xylene dispersion of Example 6.

The composition was evaluated and tested under the same conditions as stated in Examle 6 and it was found that the use-up rate was 0.22 and surface area adhered with submarine livings in immersion test was 0%.

Example 7

A coating composition was prepared by mixing I00 parts of an air drying type alkyd paint containing no mildew proofing agent (a solid content of 60%, white) and I0 parts of a metal compound carrying resinous particles powder obtained in Example 2. Then said coating composition was applied onto a bathroom wall

surface. After I year late, no mildew was observed.

## Claims

1. Resinous particles carrying on the respective grain surface a metal compound through a metal ester bonding, which are prepared by reacting a metal compound with resinous particles having a mean diameter of about 0.01 to 250 μm (microns) and bearing organic acid group(s) in the form of free acid or salt on the respective grain surface thereof.

2. Crosslinked resinous particles carrying on the respective grain surface a metal compound through a metal ester bonding, which are prepared by reacting a metal compound with cross linked resinous particles having a mean diameter of about 0.01 to 250 μm (microns) and bearing organic acid group(s) in the form of free acid or salt on the respective grain surface thereof.

3. Resinous particles as claimed in claim 1 or 2, characterized in that the resinous particles bear organic acid group(s) in the form of free acid or amine salt on the respective grain surface, and the metal compound is selected from metal oxide, metal hydroxide and mixtures thereof.

4. Resinous particles as claimed in claim 1 or 2, characterized in that the resinous particles bear organic acid group(s) in the form of alkali metal salt on the respective grain surface, and the metal compound is a metal chloride.

5. Resinous particles as claimed in claim 1 or 2, characterized in that the resinous particles bear organic acid group(s) in the form of free acid on the respective grain surface, and the metal compound is a metal salt of an organic acid.

6. Resinous particles as claimed in any of claims 1 to 5, characterized in that the acid value of the resinous particles is 5 to 700.

7. Resinous particles as claimed in any of claims 1 to 6, characterized in that the metal of said metal compound is selected from groups IB, IIB, IIIA, IVA, VA, VB, VIA, VIB, VIIB, and VIII of the periodic table.

8. Resinous particles as claimed in claim 7, characterized in that the metal is selected from Ti, Zr, Cr, Mo, Mn, Fe, Co, Ni, Cu, Zn, Cd, Hg, B, Al, Si, Ge, Sn, Pb, As, Sb, Se, and Te.

9. Resinous particles as claimed in any of claims 1 to 8, characterized in that resin particles are prepared by a dispersion method comprising conducting a polymerization of an ethylenically unsaturated monomer and an acid monomer by emulsion, suspension or precipitation or NAD polymerization procedures, and then obtaining the intended product directly or by milling and classifying the polymerization product.

10. A method of preparation of resinous particles according to claim 1, carrying on the respective grain surface a metal compound through a metal ester bonding, which is characterized by reacting a metal compound with resinous particles having a mean diameter of about 0.01 to 250 μm (microns) and bearing organic acid group(s) in the form of free acid or salt on the respective grain surface thereof.

11. A method of preparation of crosslinked resinous particles according to claim 2, carrying on the respective grain surface a metal compound through a metal ester bonding, which is characterized by reacting a metal compound with crosslinked resinous particles having a mean diameter of about 0.01 to 250 μm (microns) and bearing organic acid group(s) in the form of free acid or salt on the respective grain surface thereof.

12. A method as claimed in claim 10 or 11, characterized in that the resinous particles bear organic acid group(s) in the form of free acid or amine salt on the respective grain surface, and the metal compound is selected from metal oxide, metal hydroxide and mixtures thereof.

13. A method as claimed in claim 10 or 11, characterized in that the resinous particles bear organic acid group(s) in the form of alkali metal salt on the respective grain surface, and the metal compound is a metal chloride.

14. A method as claimed in claim 10 or 11, characterized in that the resinous particles bear organic acid group(s) in the form of free acid on the respective grain surface, and the metal compound is a metal salt of an organic acid.

15. A method as claimed in any of claims 10 to 14, characterized in that the acid value of said resinous particles is 5 to 700.

16. A method as claimed in any of claims 10 to 15, characterized in that the metal of said metal compound is selected from groups IB, IIB, IIIA, IVA, VA, VB, VIA, VIB, VIIB and VIII of the periodic table.

17. A method as claimed in claim 16, characterized in that the metal is selected from Ti, Zr, Cr, Mo, Mn, Fe, Co, Ni, Cu, Zn, Cd, Hg, B, Al, Si, Ge, Sn, Pb, As, Sb, Se, and Te.

18. A method as claimed in any of claims 10 to 17, characterized in that the resinous particles are prepared by a dispersion method comprising conducting a polymerization of an ethylenically unsaturated monomer and an acid monomer by emulsion, suspension or precipitation or NAD polymerization procedures, and then obtaining the intended product directly or by milling and classifying the polymerization product.

## Revendications

1. Particules résineuses portant un composé métallique sur la surface de leurs grains respectifs par le moyen d'une liaison ester métallique, qui sont préparées en faisant réagir un composé métallique avec des particules résineuses ayant un diamètre moyen d'environ 0,01 à 250 $\mu$m (microns) et portant un ou plusieurs groupements d'acide organique sous la forme d'acide libre ou de sel sur la surface de leurs grains respectifs.

2. Particules résineuses réticulées portant un composé métallique sur la surface de leurs grains respectifs par le moyen d'une liaison ester métallique, qui sont préparées en faisant réagir un composé métallique avec des particules résineuses réticulées ayant un diamètre moyen d'environ 0,01 à 250 $\mu$m (microns) et portant un ou plusieurs groupements d'acide organique sous la forme d'acide libre ou de sel sur la surface de leurs grains respectifs.

3. Particules résineuses telles que revendiquées dans la Revendication 1 ou 2, caractérisées en ce que les particules résineuses portent un ou plusieurs groupements d'acide organique sous la forme d'acide libre ou de sel d'amine sur la surface de leurs grains respectifs et que le composé métallique est choisi parmi les oxydes métalliques, hydroxydes métalliques et leurs mélanges.

4. Particules résineuses telles que revendiquées dans la Revendication 1 ou 2, caractérisées en ce que les particules résineuses portent un ou plusieurs groupements d'acide organique sous la forme d'un sel de métal alcalin sur la surface de leurs grains respectifs et que le composé métallique est un chlorure métallique.

5. Particules résineuses telles que revendiquées dans la Revendication 1 ou 2, caractérisées en ce que les particules résineuses portent un ou plusieurs groupements d'acide organique sous la forme d'acide libre sur la surface de leurs grains respectifs et que le composé métallique est un sel métallique d'un acide organique.

6. Particules résineuses telles que revendiquées dans l'une quelconque des Revendication 1 à 5, caractérisées en ce que l'indice d'acide des particules résineuses est de 5 à 700.

7. Particules résineuses telles que revendiquées dans l'une quelconque des Revendications 1 à 6, caractérisées en ce que le métal dudit composé métallique est choisi parmi les groupes IB, IIb, IIIA, IVA, VA, VB, VIA, VIB, VIIB et VIII du tableau périodique.

8. Particules résineuses telles que revendiquées dans la Revendication 7, caractérisées en ce que le métal est choisi parmi les Ti, Zr, Cr, Mo, Mn, Fe, Co, Ni, Cu, Zn, Cd, Hg, B, Al, Si, Ge, Sn, Pb, As, Sb, Se et Te.

9. Particules résineuses telles que revendiquées dans l'une quelconque des Revendications 1 à 8, caractérisées en ce que les particules résineuses sont préparées par une méthode en dispersion comprenant l'exécution d'une polymérisation d'un monomère éthylénique non saturé et d'un monomère acide par des procédés de polymérisation en émulsion, en suspension ou en précipitation ou NAD en obtenant alors le produit voulu directement ou par mouture et classification du produit de polymérisation.

10. Méthode de préparation de particules résineuses suivant la Revendication 1, portant un composé métallique sur la surface de leurs grains respectifs par le moyen d'une liaison ester métallique, laquelle est caractérisée par la réaction d'un composé métallique avec des particules résineuses ayant un diamètre moyen d'environ 0,01 à 250 μm (microns) et portant un ou plusieurs groupements d'acide organique sous la forme d'acide libre ou de sel sur la surface de leurs grains respectifs.

11. Méthode de préparation de particules résineuses réticulées suivant la Revendication 2, portant un composé métallique sur la surface de leurs grains respectifs par le moyen d'une liaison ester métallique, laquelle est caractérisée par la réaction d'un composé métallique avec des particules résineuses réticulées ayant un diamètre moyen d'environ 0,01 à 250 μm (microns) et portant un ou plusieurs groupements d'acide organique sous la forme d'acide libre ou de sel sur la surface de leurs grains respectifs.

12. Méthode telle que revendiquée dans la Revendication 10 ou 11, caractérisée en ce que les particules résineuses portent un ou plusieurs groupements d'acide organique sous la forme d'acide libre ou de sel d'amine sur la surface de leurs grains respectifs et que le composé métallique est choisi parmi les oxydes métalliques, hydroxydes métalliques et leurs mélanges.

13. Méthode telle que revendiquée dans la Revendication 10 ou 11, caractérisée en ce que les particules résineuses portent un ou plusieurs groupements d'acide organique sous la forme de sel de métal alcalin sur la surface de leurs grains respectifs et que le composé métallique est un chlorure métallique.

14. Méthode telle que revendiquée dans la Revendication 10 ou 11, caractérisée en ce que les particules résineuses portent un ou plusieurs groupements d'acide organique sous la forme d'acide libre sur la surface de leurs grains respectifs et que le composé métallique est un sel métallique d'un acide organique.

15. Méthode telle que revendiquée dans l'une quelconque des revendications 10 à 14, caractérisée en ce que l'indice d'acide desdites particules résineuses est de 5 à 700.

16. Méthode telle que revendiquée dans l'une quelconque des revendications 10 à 15, caractérisée en ce que le métal dudit composé métallique est choisi parmi les groupes IB, IIb, IIIA, IVA, VA, VB, VIA, VIB, VIIB et VIII du tableau périodique.

17. Méthode telle que revendiquée dans la revendication 16, caractérisée en ce que le métal est choisi parmi les Ti, Zr, Cr, Mo, Mn, Fe, Co, Ni, Cu, Zn, Cd, Hg, B, Al, Si, Ge, Sn, Pb, As, Sb, Se et Te.

18. Méthode telle que revendiquée dans l'une quelconque des revendications 10 à 17, caractérisée en ce que les particules résineuses sont préparées par une méthode en dispersion comprenant l'exécution d'une polymérisation d'un monomère éthylénique non saturé et d'un monomère acide par des procédés de polymérisation en émulsion, en suspension ou en précipitation ou NAD en obtenant alors le produit voulu directement ou par mouture et classification du produit de polymérisation.

**Patentansprüche**

1. Harzartige Teilchen, die auf der jeweiligen Kornoberfläche über eine Metallesterbindung eine Metallverbindung tragen, die hergestellt worden sind durch Umsetzung einer Metallverbindung mit harzartigen Teilchen mit einem mittleren Durchmesser von etwa 0,01 bis 250 μm (Micron) und eine oder mehr organische Säuregruppen in Form einer freien Säure oder eines Salzes auf ihrer jeweiligen Kornoberflächen tragen.

2. Vernetzte harzartige Teilchen, die auf der jeweiligen Kornoberfläche über eine Metallesterbindung eine Metallverbindung tragen, die hergestellt worden sind durch Umsetzung einer Metallverbindung mit vernetzten harzartigen Teilchen mit einem mittleren Durchmesser von etwa 0,01 bis 250 μm (Micron) und eine oder mehr organische Säuregruppen in Form einer freien Säure oder eines Salzes auf ihrer jeweiligen Kornoberfläche tragen.

3. Harzartige Teilchen nach Anspruch 1 oder 2, dadurch gekennzeichnet, daß die harzartigen Teilchen eine oder mehr organische Säuregruppen in Form einer freien Säure oder eines Aminsalzes auf der jeweiligen Kornoberfläche tragen und daß die Metallverbindung ausgewählt wird aus einem Metalloxid, einem Metallhydroxid und Mischungen davon.

4. Harzartige Teilchen nach Anspruch 1 oder 2, dadurch gekennzeichnet, daß die harzartigen Teilchen eine oder mehr organische Säuregruppen in Form eines Alkalimetallsalzes auf der jeweiligen Kornoberfläche tragen und daß die Metallverbindung ein Metallchlorid ist.

5. Harzartige Teilchen nach Anspruch 1 oder 2, dadurch gekennzeichnet, daß die harzartigen Teilchen eine oder mehr organische Säuregruppen in Form einer freien Säure auf der jeweiligen Kornoberfläche tragen und daß die Metallverbindung ein Metallsalz einer organischen Säure ist.

6. Harzartige Teilchen nach einem der Ansprüche 1 bis 5, dadurch gekennzeichnet, daß die Säurezahl der harzartigen Teilchen 5 bis 700 beträgt.

7. Harzartige Teilchen nach einem der Ansprüche 1 bis 6, dadurch gekennzeichnet, daß das Metall der Metallverbindung ausgewählt wird aus den Gruppen IB, IIB, IIIA, IVA, VA, VB, VIA, VIB, VIIB und VIII des Periodischen Systems der Elemente.

8. Harzartige Teilchen nach Anspruch 7, dadurch gekennzeichnet, daß das Metall ausgewählt wird aus Ti, Zr, Cr, Mo, Mn, Fe, Co, Ni, Cu, Zn, Cd, Hg, B, Al, Si, Ge, Sn, Pb, As, Sb, Se und Te.

9. Harzartige Teilchen nach einem.der Ansprüche 1 bis 8, dadurch gekennzeichnet, daß die Harzteilchen hergestellt worden sind nach einem Dispersionsverfahren, das umfaßt die Durchführung einer Polymerisation eines ethylenisch ungesättigten Monomers und eines Säuremonomers durch Emulsions-, Suspensions-oder Ausfällungs- oder NAD-Polymerisations-Verfahren und die anschließende Gewinnung des gewünschten Produkts direkt oder durch Mahlen und Klassieren des Polymerisationsprodukts.

10. Verfahren zur Herstellung von harzartigen Teilchen nach Anspruch 1, die auf der jeweiligen Kornoberfläche über eine Metallesterbindung eine Metallverbindung tragen, das dadurch gekennzeichnet ist, daß eine Metallverbindung mit harzartigen Teilchen mit einem mittleren Durchmesser von etwa 0,01 bis 250 μm (Micron), die eine oder mehr organische Säuregruppen in Form einer freien Säure oder eines Salzes auf ihrer jeweiligen Kornoberfläche tragen, umgesetzt wird.

11. Verfahren zur Herstellung von vernetzten harzartigen Teilchen nach Anspruch 2, die auf der jeweiligen Kornoberfläche über eine Metallesterbindung eine Metallverbindung tragen, das dadurch gekennzeichnet ist, daß eine Metallverbindung mit vernetzten harzartigen Teilchen mit einem mittleren Durchmesser von etwa 0,01 bis 250 μm (Micron), die eine oder mehr organische Säuregruppen in Form einer freien Säure oder eines Salzes auf ihrer jeweiligen Kornoberfläche tragen, umgesetzt wird.

12. Verfahren nach Anspruch 10 oder 11, dadurch gekennzeichnet, daß die harzartigen Teilchen eine oder mehr organische Säuregruppen in Form einer freien Säure oder eines Aminsalzes auf der jeweiligen Kornoberfläche tragen und daß die Metallverbindung ausgewählt wird aus einem Metalloxid, einem Metallhydroxid und Mischungen davon.

13. Verfahren nach Anspruch 10 oder 11, dadurch gekennzeichnet, daß die harzartigen Teilchen eine oder mehr organische Säuregruppen in Form eines Alkalimetallsalzes auf der jeweiligen Kornoberfläche tragen und daß die Metallverbindung ein Metallchlorid ist.

14. Verfahren nach Anspruch 10 oder 11, dadurch gekennzeichnet, daß die harzartigen Teilchen eine oder mehr organische Säuregruppen in Form einer freien Säure auf der jeweiligen Kornoberfläche tragen und daß die Metallverbindung ein Metallsalz einer organischen Säure ist.

15. Verfahren nach einem der Ansprüche 10 bis 14, dadurch gekennzeichnet, daß die Säurezahl der harzartigen Teilchen 5 bis 700 beträgt.

16. Verfahren nach einem der Ansprüche 10 bis 15, dadurch gekennzeichnet, daß das Metall der Metallverbindung ausgewählt wird aus den Gruppen IB, IIB, IIIA, IVA, VA, VB, VIA, VIB, VIIB und VIII des Periodischen Systems der Elemente.

17. Verfahren nach Anspruch 16, dadurch gekennzeichnet, daß das Metall ausgewählt wird aus Ti, Zr, Cr, Mo, Mn, Fe, Co, Ni, Cu, Zn, Cd, Hg, B, Al, Si, Ge, Sn, Pb, As, Sb, Se und Te.

18. Verfahren nach einem der Ansprüche 10 bis 17, dadurch gekennzeichnet, daß die harzartigen Teilchen hergestellt werden nach einem Dispersionsverfahren, das umfaßt die Durchführung einer Polymerisation eines ethylenisch ungesättigten Monomers und eines Säuremonomers durch Emulsions-, Suspensions- oder Ausfällungs- oder NAD-Polymerisationsverfahren und die anschließende Gewinnung des gewünschten Produkts direkt oder durch Mahlen und Klassieren des Polymerisationsprodukts.